# EUROPEAN PATENT SPECIFICATION

(11) **EP 2 949 562 B1**
(45) Date of publication and mention of the grant of the patent: **29.06.2016**
(21) Application number: 14194111.2
(22) Date of filing: 20.11.2014
(51) Int. Cl.: B62K 11/04

(54) **Motor vehicle**
Kraftfahrzeug
Véhicule à moteur

(30) Priority: 30.05.2014 JP 2014112931
(43) Date of publication of application: 02.12.2015
(73) Proprietor: Yamaha Hatsudoki Kabushiki Kaisha, Shizuoka-ken 438-8501 (JP)
(72) Inventor: Onoue, Tomoki, Shizuoka-ken, 438-8501 (JP); Okamura, Masaru, Shizuoka-ken, 438-8501 (JP)
(74) Representative: Moreland, David

(56) References cited:
- EP-A1- 2 727 804
- JP-A- H10 218 057

## Description

### FIELD OF INVENTION

The present invention relates to a saddle-ride or straddle type vehicle that includes an engine and a control unit.

### BACKGROUND TO INVENTION

A saddle-ride or straddle type vehicle, e.g. a saddle-straddling type motor vehicle, such as a motorcycle has an electronic control unit that performs electronic control of an engine and the like. The electronic control unit is connected to various electric components by a plurality of harnesses. Therefore, it is desirable from a point of view of shortening the harnesses and centralization of the mass that the electronic control unit is arranged in the vicinity of a center of a vehicle, that is, in the vicinity of the engine. In that case, however, the electronic control unit is likely to be influenced by heat from the engine.

In a motorcycle described in JP 2009-241803 A, engine hangers that extend in a downward direction are integrally provided at a body frame. An engine body of an engine is supported by the engine hangers in the vicinity of a center of a vehicle body. The control unit is stored in a control unit support case. On the left side of the engine body, the control unit support case is arranged below the engine hanger on the side of the engine body. An air stream inlet for leading an air stream to the control unit is formed in front of the control unit support case. Further, an air stream outlet for discharging the air stream that has passed through the side of the control unit is formed behind the control unit support case.

EP 2 727 804, on which the preamble of claim 1 is based, describes a straddle vehicle, such as a motorcycle, in which a harness of an electric power supply system that is thick, has a great weight, and is not easily mounted is reduced in length so that a weight and cost can be reduced, and assembly can be made easier. An air cleaner and a fuel tank are disposed at a relatively rearward position such that the air cleaner and the fuel tank are disposed behind and distant from the head pipe to provide an electric component mounting space between the air cleaner and the fuel tank. The head pipe, a regulator, a relay box and a fuse box are disposed in the electric component mounting space. A main frame includes two frame members, i.e., right and left frame members extending rearward from the head pipe. Below the main frame, an engine having a plurality of cylinders is placed. A cylinder block and a cylinder head of the engine are inclined slightly forward. A front portion of the cylinder block is mounted to a down frame extending downward from the main frame. An engine control unit (ECU) is disposed on an upper surface of the air cleaner just behind the electric component mounting space. A harness extends forward and rearward in the vehicle body from the ECU and is bundled with the harness in the electric power supply system for connecting the regulator, the relay box and the fuse box in the electric component mounting space to the alternator and the battery.

JP H10-218 057 describes an arrangement of an electric equipment which is protected by a vehicle body of a motorcycle and work can be performed from sideward of the vehicle body.

In particular a vehicle body frame is constituted by a pair of right/left main frames extending rearward from a head pipe and a pair of right/left pivot frames extending in a vertical direction in a rear end part of the main frame. A V-engine is arranged between the right/left main frames. A space serving as a passage for ram air is formed between the V engine and the main frame. In this space, an ECU is received and a coupler provided in a lower end thereof is made to appear from a lower surface of the main frame to the outside. Between the right/left pivot frames, a shock absorber mounting part supporting an upper end of a shock absorber for a rear suspension is provided. In an outer side surface thereof, a battery is supported.

### SUMMARY OF INVENTION

The configuration described in JP 2009-241803 A causes the control unit to be cooled by the air stream during the travelling of the motorcycle, even when heat from the engine body directly reaches the control unit. However, the control unit is not cooled when the motorcycle is stopped.

An object of the present invention is to provide a saddle-ride or straddle type vehicle in which an entire length of a harness can be shortened while influence of heat from an engine on an electronic control unit during travelling or at a time of stopping of the vehicle is decreased.

Aspects of the present invention are defined by the independent claim 1.

Preferred features of the invention are defined by the dependent claims.

Described herein by way of example is a saddle-ride or straddle type vehicle that includes a body frame that includes a head pipe and right and left main frames extending in a vehicle rearward direction from the head pipe, a pair of engine suspension portions, each of the engine suspension portions extending in a downward direction from a respective main frame, an engine unit and an electronic control unit connected to the engine unit by a harness, wherein the engine unit includes a cylinder unit supported by the pair of engine suspension portions, and a crank unit that is positioned below the cylinder unit and is wider than the cylinder unit in a vehicle width direction, and the electronic control unit is provided such that at least a part of one engine suspension portion is positioned between the electronic control unit and the cylinder unit of the engine unit in the vehicle width direction.

In this vehicle, the right and left main frames extend in the vehicle rearward direction from the head pipe, and include the respective engine suspension portions that extend in the downward direction. The cylinder unit of the engine unit is supported by the pair of engine suspension portions. Here, at least the part of the one engine suspension portion is positioned between the electronic control unit and the cylinder unit in the vehicle width direction.

This configuration may cause heat radiated from the cylinder unit towards the electronic control unit to be shielded by the engine suspension portion, regardless of whether the vehicle is travelling or stopped. Further, the length of the harness that connects the engine unit and the electronic control unit may be shortened. Thus, the entire length of the harness may be shortened while the influence of heat from the cylinder unit on the electronic control unit may be decreased both during travelling and when the vehicle is stopped. Further, because the electronic control unit is arranged near the engine unit, the mass may be centralized.

Further, the crank unit of the engine unit is positioned below the cylinder unit. The crank unit is wider than the cylinder unit in the vehicle width direction. Therefore, even when the pair of engine suspension portions support the cylinder unit above the crank unit, an increase in the size of the vehicle in the vehicle width direction may be prevented.

The vehicle may further include a radiator arranged at a position further rearward than the head pipe and further forward than the electronic control unit and a unit holding member that may have a shielding portion for shielding the electronic control unit from the radiator and holds the electronic control unit at, adjacent, or relative to the one engine suspension portion.

In this case, the electronic control unit may be held at, adjacent, proximate or relative to the one engine suspension portion by the unit holding member behind the radiator. Here, the electronic control unit may be shielded from the radiator by the shielding portion of the unit holding member. Thus, the electronic control unit may be prevented from directly receiving the heat radiated from the radiator.

The shielding portion may have an outer surface that is configured to lead an airflow formed in a rearward direction from the radiator to an outside of the electronic control unit in the vehicle width direction.

In this case, the airflow formed or flowing in the rearward direction from the outer surface of the shielding portion may be led or guided to the outside in the vehicle width direction. Therefore, hot air from the radiator may not directly come into contact with the electronic control unit. Thus, the influence of heat from the radiator on the electronic control unit may be decreased.

The unit holding member may have a harness holder that holds a part of the harness connected to the electronic control unit at the one engine suspension portion.

In this case, the part of the harness may be held at, proximate, adjacent or relative to the one engine suspension portion by the harness holder of the unit holding member. Therefore, it may not be necessary to separately provide a member for holding the part of the harness. Thus, the part of the harness can be held with configuration in which the size and the weight are decreased.

A rear portion of the electronic control unit may comprise a connector portion to which the harness is connected.

In this case, the harness may be connected to the connector portion at the rear of the electronic control unit, which may be arranged outside the engine suspension portion. Thus, mounting and removal of the harness to/from the electronic control unit may be easily performed. Thus, maintainability of the vehicle may be improved.

The vehicle may further include a connector cover provided to cover the connector portion of the electronic control unit. In this case, waterproofness and security of the connector portion may be improved.

The vehicle may further include a unit cover mounted to the unit holding member to cover an outer surface of the electronic control unit. In the case, waterproofness and security of the electronic control unit may be improved.

The unit holding member may further have a unit mount portion positioned between the one engine suspension portion and the electronic control unit, and the shielding portion and the unit mount portion may be integrally formed.

In this case, the unit mount portion of the unit holding member may be interposed between the electronic control unit and the engine suspension portion. Thus, the radiation heat from the cylinder unit of the engine unit may be shielded by both the engine suspension portion and the unit mount portion. Further, because the shielding portion and the unit mount portion may be integrally formed, the mounting of the shielding portion and the unit mount portion, e.g. to the engine suspension portion, may be simultaneously performed. Thus, productivity of assembling the saddle-straddling type motor vehicle may be improved.

The shielding portion, the harness holder and the unit mount portion may be integrally formed.

The thickness of each of the engine suspension portions may be not less than 2.5 mm and may be not more than 10 mm.

A recess extending in the front-and-rear direction may be formed at an inner surface of the harness holder and a part of the harness may be introduced into the recess of the harness holder.

The unit mount portion may be provided at a position further upward than a central portion of the engine unit in the up-and-down direction of the vehicle.

### BRIEF DESCRIPTION OF DRAWINGS

- **Figure 1**: a side view of one side of a motorcycle according to one embodiment of the present invention;
- **Figure 2**: a plan view mainly showing a body frame of the motorcycle of Figure 1 as viewed from above;
- **Figure 3**: a side view showing mounting steps of an ECU to a main frame;
- **Figure 4**: a side view showing the mounting steps of the ECU to the main frame;
- **Figure 5**: a side view showing the mounting steps of the ECU to the main frame;
- **Figure 6**: a side view showing the mounting steps of the ECU to the main frame;
- **Figure 7**: a side view showing the mounting steps of the ECU to the main frame;
- **Figure 8**: a side view showing the mounting steps of the ECU to the main frame;
- **Figure 9**: a cross sectional view showing a positional relationship between the ECU and its peripheral members; and
- **Figure 10**: a cross sectional view showing the positional relationship between the ECU and its peripheral members.

### DETAILED DESCRIPTION OF DRAWINGS

A saddle-ride or straddle type vehicle according to one embodiment of the present invention will be described below with reference to drawings. In the following description, a motorcycle will be described as one example of the saddle-ride or straddle type vehicle, e.g. the saddle-straddling type motor vehicle.

### Schematic Configuration of Motorcycle

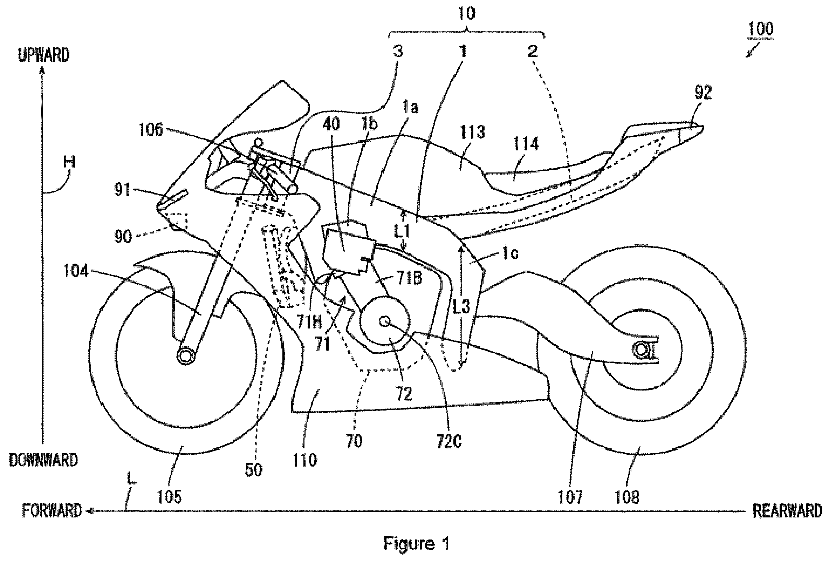

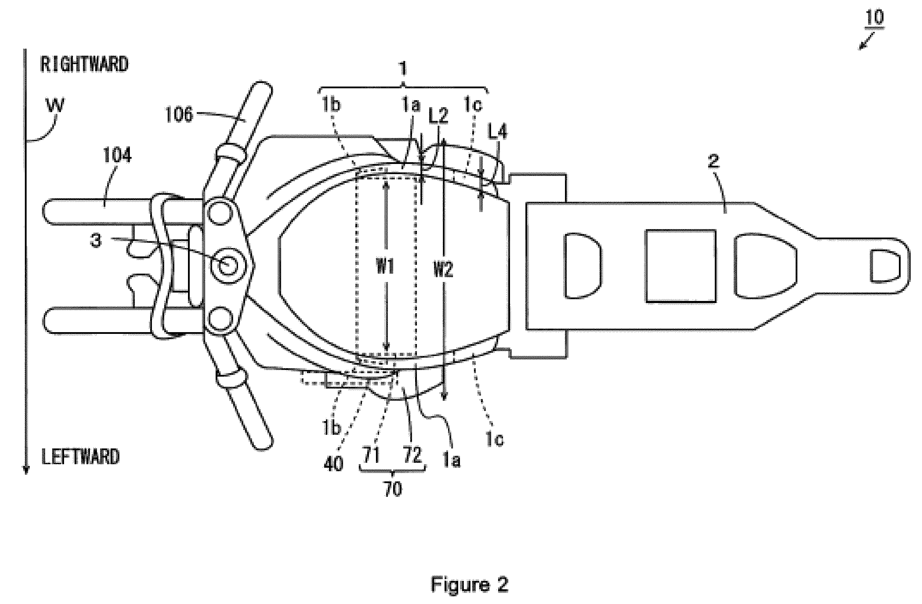

Figure 1 is a side view of one side of the motorcycle according to the one embodiment of the present invention. Figure 2 is a plan view mainly showing a body frame of the motorcycle as viewed from above. Figure 1 shows the motorcycle 100 standing up to be perpendicular to the road surface. In Figure 1, a front-and-rear direction L and a top-and-bottom direction H of the motorcycle 100 are indicated by arrows. In Figure 2, a width direction W of the motorcycle 100 is indicated by an arrow. In the following description, a direction in which the arrow is directed in the front-and-rear direction L is referred to as a forward direction, and its opposite direction is referred to as a rearward direction. Further, a direction in which the arrow is directed in the top-and-bottom direction H is referred to as an upward direction, and its opposite direction is referred to as a downward direction. Furthermore, a direction in which the arrow is directed in the width direction W is referred to as a leftward direction, and its opposite direction is referred to as a rightward direction.

As shown in Figure 1, the motorcycle 100 includes a body frame 10. The body frame 10 includes right and left main frames 1, a rear frame 2 and a head pipe 3. The head pipe 3 rotatably supports a steering shaft. The main frames 1 extend in an obliquely downward and rearward direction from the head pipe 3. The rear ends of the main frames 1 are curved in the downward direction. The rear frame 2 extends in the rearward direction from upper portions at the rear ends of the main frames 1. Each of the main frames 1 has a respective engine suspension portion 1 b at a substantially central portion thereof. As shown in Figure 2, both main frames 1 extend in the rearward direction from the head pipe 3 to spread outward, and are curved inward when seen in plan view. The rear frame 2 is coupled to the rear portions, which are curved inward, of the main frames 1.

As shown in Figure 1, a front fork 104 is provided at the head pipe 3 to be swingable to the right and the left. Headlamps 90 and position lamps 91 are mounted in front of the front fork 104. The headlamps 90 and the position lamps 91 are positioned in front of the head pipe 3. A front wheel 105 is rotatably supported at the lower end of the front fork 104. A handle 106 is mounted to the upper end of the front fork 104. A body cover 110 is provided to cover a part of each of the main frames 1 and the front fork 104.

An engine unit 70 is provided below a pair of tank supporters 1 a, described below, of the pair of main frames 1. The engine unit 70 includes a cylinder unit 71 and a crank unit 72. An engine is constituted by the cylinder unit 71 and the crank unit 72.

The cylinder unit 71 includes a cylinder body 71 B, a cylinder head 71 H and the like. The cylinder head 71 H includes a fuel injection device, an ignition device and the like. The crank unit 72 includes a crankcase, a crankshaft, a starter motor, a generator and a transmission and the like. The crank unit 72 is positioned below the cylinder unit 71.

The cylinder unit 71 of the engine unit 70 is supported by the pair of engine suspension portions 1 b. Thus, the cylinder head 71 H of the cylinder unit 71 is positioned between the main frames 1 and the cylinder body 71 B of the crank unit 71 and the crank unit 72 are positioned below or under a region between the main frames 1.

As shown in Figure 2, a width W2 of the crank unit 72 in the width direction of the motorcycle 100 is larger than a width W1 of the cylinder unit 71. Therefore, it is possible to support the cylinder head 71 H of the cylinder unit 71 above the crank unit 72 by the pair of engine suspension portions 1 b without an increase in the distance between the main frames 1. Therefore, an increase in the size of the motorcycle 100 in the width direction is prevented.

As shown in Figure 1, a fuel tank 113 is supported above or over the engine unit 70 by the pair of main frames 1. A seat 114 is supported behind the fuel tank 113 by the rear frame 2. A tail lamp 92 is provided behind the seat 114. A swing arm 107 is provided to extend in the rearward direction from the lower ends of the main frames 1. A rear wheel 108 is rotatably held at the rear end of the swing arm 107.

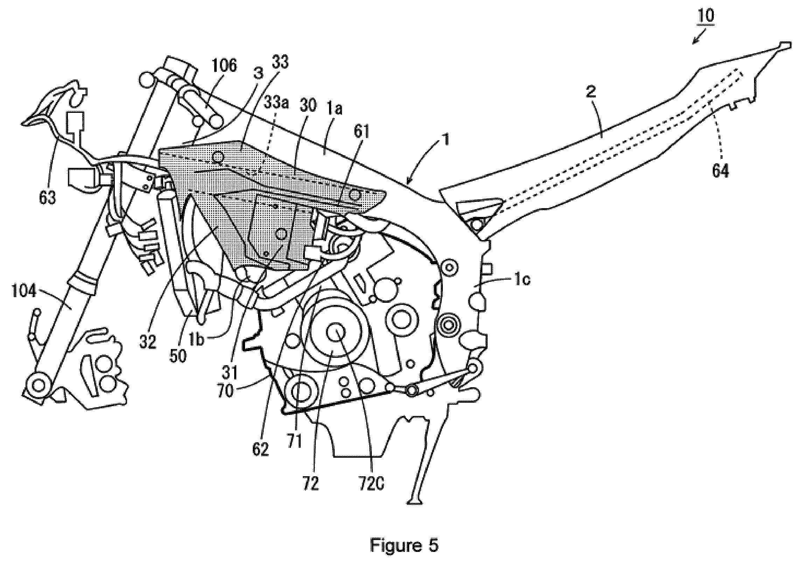

An ECU (Electronic Control Unit) is provided adjacent one engine suspension portion 1 b by a unit holding member 30 (Figure 5), described below. A part of the one engine suspension portion 1 b is positioned between the ECU 40 and the engine unit 70 in the width direction of the motorcycle 100.

The ECU 40 is constituted by a CPU (Central Processing Unit) and a memory, or a microcomputer, for example. The ECU 40 is connected to the engine unit 70 by a harness. The ECU 40 performs electronic control of the engine unit 70. A radiator 50 is arranged at a position further rearward than the head pipe 3 and further forward than the ECU 40.

Further, the ECU 40 is connected to front electric components provided at front portions of the motorcycle 100 by harnesses, and is connected to rear electric components provided at rear portions of the motorcycle 100 by harnesses. The front electric components include the headlamps 90, the position lamps 91 and a horn (not shown), turn indicator lamps and a speedometer, for example. The rear electric components include the tail lamp 92 and turn indicator lamps (not shown), and a battery, for example.

### Mounting Structure of ECU

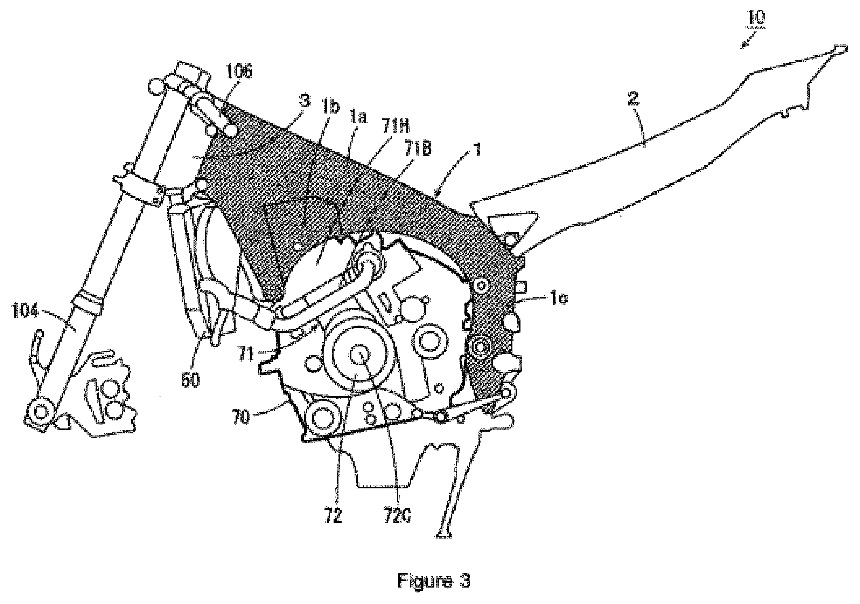

The mounting structure of the ECU 40 to the main frame 1 will be described. Figures 3 to 8 are side views showing the mounting steps of the ECU 40 to the main frame 1. In Figures 3 to 8, a contour of the engine unit 70 is indicated by the bold solid line.

In Figure 3, the main frame 1 is indicated by a hatched pattern. As shown in Figure 3, each main frame 1 is constituted by the tank supporter 1 a, the engine suspension portion 1 b and a swing arm supporter 1 c. The tank supporters 1 a extend in an obliquely downward rearward direction from the head pipe 3 when seen in side view. Each swing arm supporter 1 c extends in the downward direction from the rear end of the respective tank supporter 1 a. The fuel tank 113 of Figure 1 is supported by the pair of tank supporters 1a. Further, the swing arm 107 of Figure 1 is mounted to the pair of swing arm supporters 1 c. Each engine suspension portion 1 b extends in the downward direction from the respective tank supporter 1 a at a position further forward than the respective swing arm supporter 1 c.

A measurement L1 of each tank supporter 1a in the top-and-bottom direction H (see Figure 1) is larger than a measurement L2 of each tank supporter 1 a in the width direction W (see Figure 2). Therefore, each tank supporter 1 a has an oblong cross section extending in the top-and-bottom direction H when seen in front view. Similarly, a measurement L3 of each swing arm supporter 1c in the top-and-bottom direction H is larger than a measurement L4 of each swing arm supporter 1c in the width direction W. Therefore, each swing arm supporter 1c has an oblong cross section extending in the top-and-bottom direction H when seen in front view.

The engine suspension portions 1 b are formed of metal. In the present example, each of the engine suspension portions 1 b is formed of aluminium, for example. Each of the engine suspension portions 1 b may be formed of iron, for example. In the present embodiment, the engine suspension portions 1 b are each integrally provided with the respective tank supporter 1 a by being welded to the respective tank supporter 1 a.

The cylinder head 71 H of the cylinder unit 71 of the engine unit 70 is supported between the engine suspension portions 1 b. The thickness of each of the engine suspension portions 1 b is not less than 2.5 mm and not more than 10 mm, for example. In this case, heat from the cylinder unit 71 is sufficiently shielded by the engine suspension portion 1 b.

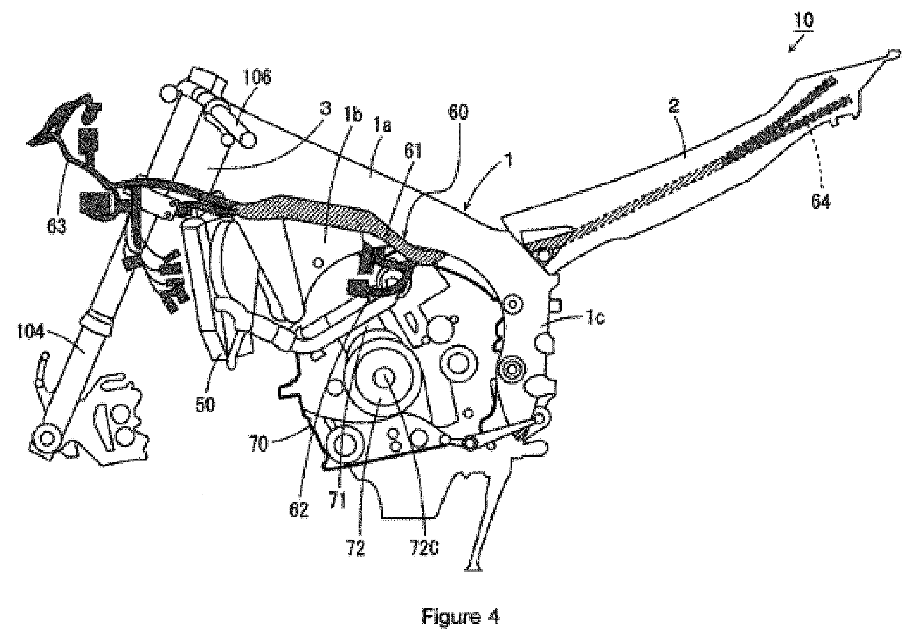

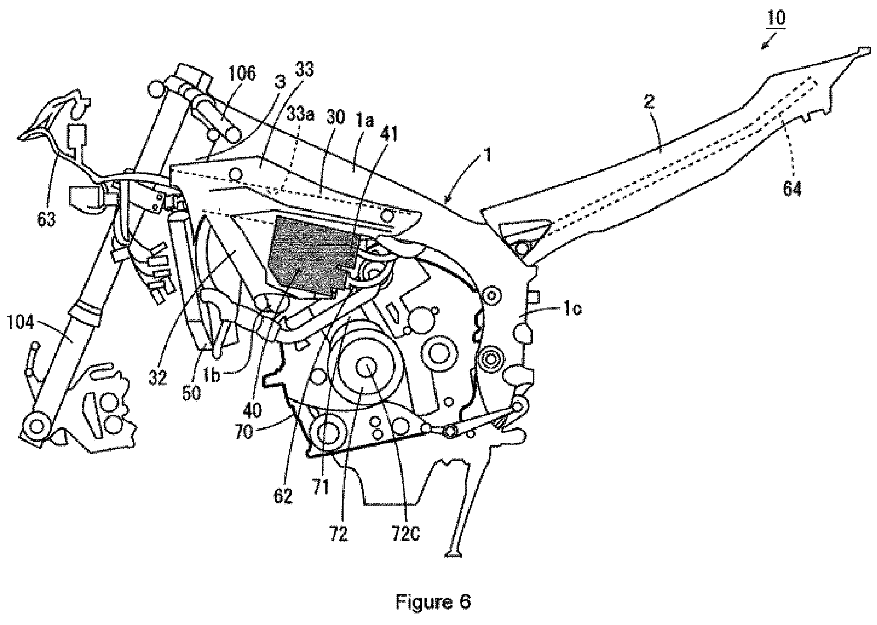

As shown in Figure 4, a harness group 60 is provided in the body frame 10. The harness group 60 includes a main-harness portion 61 and a plurality of (three in the present example) sub-harness portions 62, 63, 64. In Figure 4, the main-harness portion 61 is indicated by a first hatched pattern, and the sub-harness portions 62 to 64 are indicated by a second hatched pattern different from the first hatched pattern. The main-harness portion 61 is provided to extend in the front-and-rear direction L and is connected to the ECU 40 (see Figure 6) mounted in the following step.

The sub-harness portion 62 is used to connect the main-harness portion 61 with the engine unit 70. Because the ECU 40 of Figure 6 is provided at a position close to the engine unit 70, the length of the harness group 60 can be shortened. The sub-harness portion 63 is used to connect the main-harness portion 61 with the front electric components. The sub-harness portion 64 is used to connect the main-harness portion 61 with the rear electric components.

As shown in Figure 5, the unit holding member 30 is mounted outside one (left in the present example) main frame 1 to cover the one (left in the present example) engine suspension portion 1 b. In Figure 5, the unit holding member 30 is indicated by a dotted pattern. Thus, a part of the one engine suspension portion 1 b is positioned between the unit holding member 30 and the engine unit 70 in the width direction of the motorcycle 100.

The unit holding member 30 includes a unit mount portion 31, a shielding portion 32 and a harness holder 33. The unit mount portion 31 is arranged to overlap with a rear portion of the engine suspension portion 1 b in a side view of the vehicle. The shielding portion 32 is provided at the front end of the unit mount portion 31 to overlap with a front portion of the engine suspension portion 1 b in a side view of the vehicle. The harness holder 33 is provided at the upper end of the unit mount portion 31 to overlap with a part of the tank supporter 1 a and a part of the engine suspension portion 1 b in a side view of the vehicle.

In the present embodiment, the unit mount portion 31, the shielding portion 32 and the harness holder 33 are integrally formed of resin. Thus, mounting of the unit mount portion 31, the shielding portion 32 and the harness holder 33 to the engine suspension portion 1 b can be simultaneously performed. As a result, productivity of the motorcycle 100 can be improved.

A recess 33a extending in the front-and-rear direction is formed at the inner surface of the harness holder 33. In this case, a part of the harness group 60 is introduced into the recess 33a of the harness holder 33. Thus, the part of the harness group 60 is held at the outer surfaces of the tank supporter 1 a and the engine suspension portion 1 b. Therefore, it is not necessary to separately provide a member for holding the part of the harness group 60 in the motorcycle 100. Thus, the part of the harness group 60 can be held with the configuration in which the size and the weight are decreased.

As shown in Figure 6, the ECU 40 is mounted to the unit mount portion 31 of the unit holding member 30. In Figure 6, the ECU 40 is indicated by a dotted pattern. In the present embodiment, the ECU 40 is slid from a position behind the unit mount portion 31 to be mounted to the unit mount portion 31. The ECU 40 has a connector portion 41 to which the harness group 60 is connected. The connector portion 41 is positioned behind or at the back of the ECU 40 with the ECU 40 being mounted to the unit mount portion 31.

In the present embodiment, a larger space is formed in an area behind the ECU 40 than an area in front of the ECU 40. Therefore, the connector portion 41 is positioned behind the ECU 40, so that the mounting and removal of the harness group 60 to/from the ECU 40 can be easily performed. Thus, maintainability of the motorcycle 100 is improved.

Further, many parts of the front electric components and the rear electric components are provided at positions further upward than the central portion of the engine unit 70 in the up-and-down direction H. In the present embodiment, the unit mount portion 31 is provided at a position further upward than the central portion of the engine unit 70 in the up-and-down direction H. Thus, the length of the harness group 60 can be more sufficiently shortened, and the weight of the harness group 60 can be more sufficiently decreased.

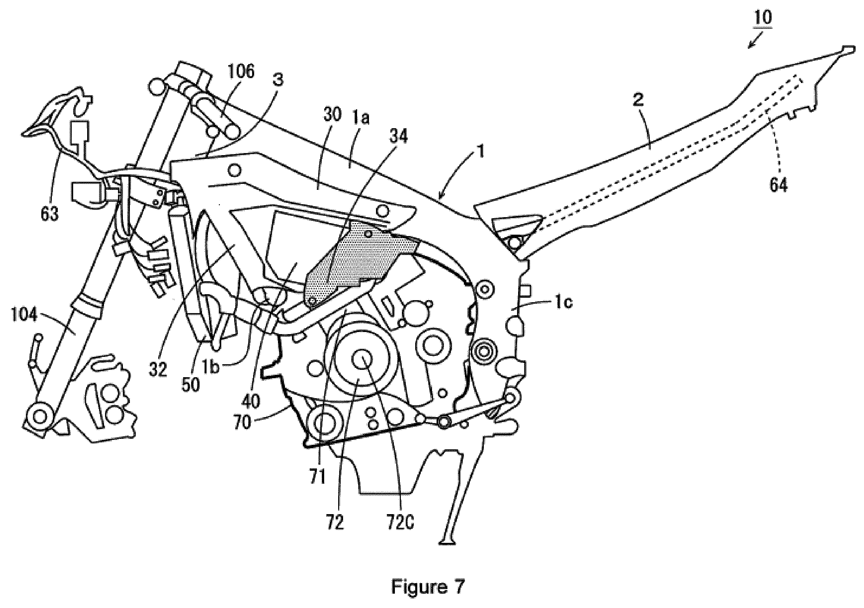

As shown in Figure 7, a connector cover 34 is mounted to the unit mount portion 31 to cover the connector portion 41 of the ECU 40. In Figure 7, the connector cover 34 is indicated by a dotted pattern. Thus, waterproofness of the connector portion 41 is improved. Further, an easy access to the connector portion 41 is limited. Therefore, security of the connector portion 41 is improved.

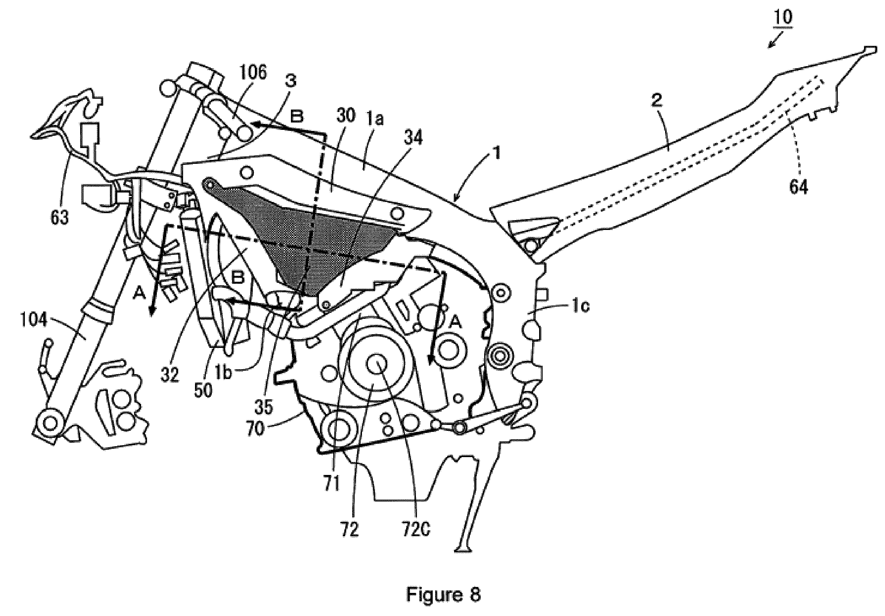

Thereafter, as shown in Figure 8, a unit cover 35 is mounted to the unit mount portion 31 to cover the ECU 40 and a part of the connector portion 41. In Figure 8, the unit cover 35 is indicated by a dotted pattern. Thus, waterproofness of the ECU 40 is improved. Further, an easy access to the ECU 40 is limited. Therefore, security of the ECU 40 is improved. Thus, the mounting of the ECU 40 to the motorcycle 100 is completed.

### Positional Relation between ECU and Peripheral Members

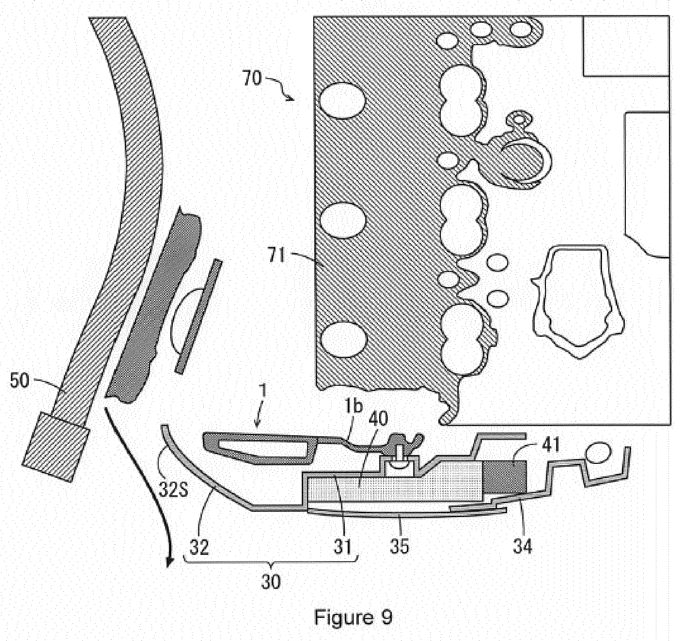

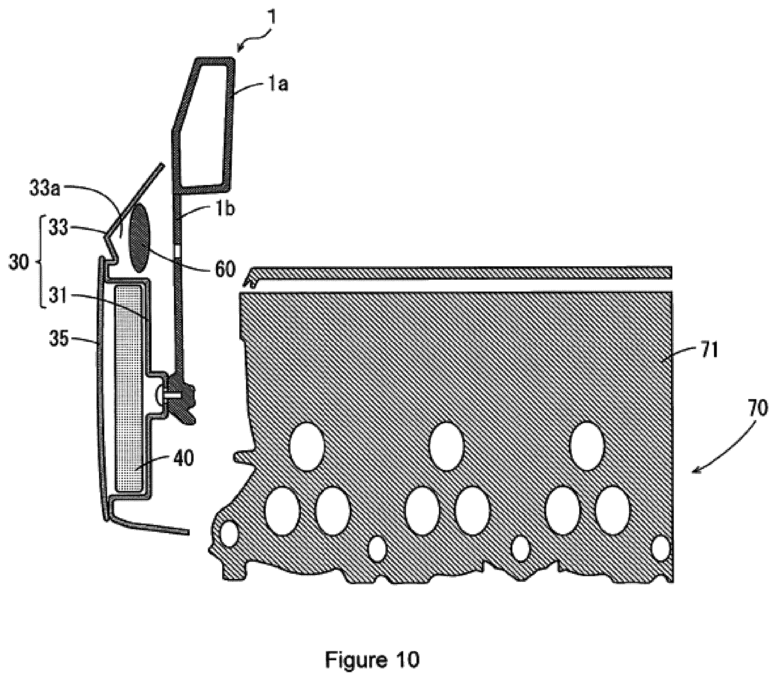

Details of the positional relation between the ECU 40 and its peripheral members will be described. Figures 9 and 10 are cross sectional views showing the positional relation between the ECU 40 and its peripheral members. Figure 9 shows a cross sectional view taken along the line A-A of Figure 8, and Figure 10 shows a cross sectional view taken along the line B-B of Figure 8.

As shown in Figures 9 and 10, the main frame 1 is formed to be hollow. A part of the engine suspension portion 1 b is positioned between the ECU 40 and the cylinder unit 71 in the width direction of the motorcycle 100. Thus, radiation heat from the cylinder unit 71 to the ECU 40 is shielded by the engine suspension portion 1 b.

In particular, in the present embodiment, the unit mount portion 31 is positioned between the one engine suspension portion 1 b and the ECU 40. Thus, the radiation heat from the cylinder unit 71 is shielded by both of the engine suspension portion 1 b and the unit mount portion 31.

Further, as shown in Figure 9, the shielding portion 32 has an outer surface 32S. The outer surface 32S has a shape of a louver (a louver board). The outer surface 32S of the shielding portion 32 is formed to be inclined in an outward rearward direction from the inside when seen in plan view. Thus, the airflow formed in the rearward direction from the radiator 50 is led to the outside of the unit mount portion 31 in the width direction of the motorcycle 100 by the outer surface 32S of the shielding portion 32 as indicated by the thick arrow in Figure 9. Thus, the ECU 40 is shielded from the radiator 50, and the ECU 40 mounted to the unit mount portion 31 is prevented from directly receiving the heat radiated from the radiator 50. As a result, influence of heat from the radiator 50 on the ECU 40 can be more sufficiently decreased. Such configuration enables the ECU 40 to be arranged close to the back of the radiator 50 as described above.

Further, as shown in Figure 10, a part of the harness group 60 is introduced into the recess 33a of the harness holder 33 of the unit holding member 30. Thus, the part of the harness group 60 is held at, proximate or adjacent the tank supporter 1 a and the engine suspension portion 1 b above the ECU 40 by the harness holder 33. Further, the ECU 40 is covered by the connector cover 34 and the unit cover 35, and a part of the harness group 60 is covered by the harness holder 33.

In this manner, the unit holding member 30, the connector cover 34 and the unit cover 35 have a function for holding the ECU 40 and the part of the harness group 60, and a design sense for maintaining aesthetic appearance of the motorcycle 100 as a cowling (a cover member).

Similarly to the unit holding member 30, a part of the body cover 110 of Figure 1 may have a function for holding another part of the harness group 60 while holding another component of the motorcycle 100. In this case, it is not necessary to separately provide a member for holding another component and another part of the harness group 60. Thus, the size and the weight of the motorcycle 100 can be decreased while the aesthetic appearance of the motorcycle 100 is maintained.

### Effects

In the motorcycle 100 according to the present embodiment, at least the part of the one engine suspension portion 1 b is positioned between the ECU 40 and the cylinder unit 71 in the width direction of the motorcycle 100. Thus, the radiation heat from the cylinder head 71 to the ECU 40 is shielded by the engine suspension portion 1 b whether the motorcycle 100 is travelling or being stopped.

Further, the ECU 40 is arranged to overlap with the engine suspension portion 1 b in a side view of the vehicle. Thus, the length of the harness group 60 that connects the engine unit 70 with the ECU 40 can be shortened. As a result, the entire length of the harness group 60 can be shortened while the influence of heat from the cylinder unit 71 on the ECU 40 during the travelling or at the time of the stopping of the motorcycle 100 is decreased.

Further, the crank unit 72 having the width W2 larger than the width W1 of the cylinder unit 71 in the width direction of the motorcycle 100 is positioned below the cylinder unit 71. Therefore, even when the pair of engine suspension portions 1 b is provided to support the cylinder unit 71 above the crank unit 72, an increase in the size of the motorcycle 100 in the width direction is prevented.

### Other Embodiments

While each of the engine suspension portions 1 b is integrally provided with the respective tank supporter 1 a by being welded to the respective tank supporter 1 a, in the above-mentioned embodiment, the invention is not limited to this. Each of the engine suspension portions 1 b may be provided separately from the respective tank supporter 1 a. In this case, each of the engine suspension portions 1 b may be fixed to the respective tank supporter 1 a by a fixing member such as a screw.

While the above-mentioned embodiment is an example in which the present invention is applied to the motorcycle, the invention is not limited to this. The present invention may be applied to another saddle-ride or straddle type vehicle, e.g. a motor tricycle, an ATV (All Terrain Vehicle) or the like.

### Correspondences between Constituent Elements in Claims and Parts in Preferred Embodiments

In the following paragraphs, non-limiting examples of correspondences between various elements recited in the claims below and those described above with respect to various preferred embodiments of the present invention are explained.

In the above-mentioned embodiment, the motorcycle 100 is an example of a saddle-straddling type motor vehicle, the head pipe 3 is an example of a head pipe and the main frame 1 is an example of a main frame. The body frame 10 is an example of a body frame, the engine suspension portion 1 b is an example of an engine suspension portion and the engine unit 70 is an example of an engine unit.

The cylinder unit 71 is an example of a cylinder unit, the crank unit 72 is an example of a crank unit, the harness group 60 is an example of a harness, the ECU 40 is an example of an electronic control unit and the connector portion 41 is an example of a connector portion. The radiator 50 is an example of a radiator, the unit holding member 30 is an example of an unit holding member, the unit mount portion 31 is an example of a unit mount portion and the shielding portion 32 is an example of a shielding portion.

The outer surface 32S is an example of an outer surface, the harness holder 33 is an example of a harness holder, the connector cover 34 is an example of a connector cover and the unit cover 35 is an example of a unit cover.

As each of various elements recited in the claims, various other elements having configurations or functions described in the claims can be also used.

The present invention can be effectively utilized for various types of saddle straddling type motor vehicles including engines and control units, respectively.

## Claims

1. A saddle-ride or straddle type vehicle (100), comprising:
a body frame (10) that includes a head pipe (3) and right and left main frames (1) extending in a vehicle rearward direction from the head pipe (3);
a pair of engine suspension portions (1 b), each engine suspension portion (1 b) extending in a downward direction from a respective main frame (1);
an engine unit (70); and
an electronic control unit (40) connected to the engine unit (70) by a harness (60), wherein
the engine unit (70) includes:
a cylinder unit (71) supported by the pair of engine suspension portions (1 b), and
a crank unit (72) that is positioned below the cylinder unit (71) and is wider than the cylinder unit (71) in a vehicle width direction; **characterized in that**
the electronic control unit (40) is provided such that at least a part of one engine suspension portion (1 b) is positioned between the electronic control unit (40) and the cylinder unit (71) of the engine unit (70) in the vehicle width direction.

2. The vehicle (100) according to claim 1, further comprising:
a radiator (50) arranged at a position further rearward than the head pipe (3) and further forward than the electronic control unit (40); and
a unit holding member (30) that has a shielding portion (32) shielding the electronic control unit (40) from the radiator (50), and holds the electronic control unit (40) at, adjacent or relative to the one engine suspension portion (1 b).

3. The vehicle (100) according to claim 2, wherein
the shielding portion (32) has an outer surface (32S) that is configured to lead an airflow formed in a rearward direction from the radiator (50) to an outside of the electronic control unit (40) in the vehicle width direction.

4. The vehicle (100) according to claim 2 or 3, wherein
the unit holding member (30) has a harness holder (33) that holds a part of the harness (60) connected to the electronic control unit (40) at the one engine suspension portion (1 b).

5. The vehicle (100) according to any one of claims 1 to 4, wherein
a rear portion of the electronic control unit (40) has a connector portion (41) to which the harness (60) is connected.

6. The vehicle (100) according to claim 5, further comprising a connector cover (34) provided to cover the connector portion (41) of the electronic control unit (40).

7. The vehicle (100) according to any one of claims 2 to 6, further comprising a unit cover (35) mounted to the unit holding member (30) to cover an outer surface of the electronic control unit (40).

8. The vehicle (100) according to any one of claims 2 to 7, wherein
the unit holding member (30) further has a unit mount portion (31) positioned between the one engine suspension portion (1b) and the electronic control unit (40), and
the shielding portion (32) and the unit mount portion (31) are integrally formed.

9. The vehicle (100) according to claim 8 when dependent on claim 4, wherein the shielding portion (32), the harness holder (33) and the unit mount portion (31) are integrally formed.

10. The vehicle (100) according to any preceding claim, wherein the thickness of each of the engine suspension portions (1b) is not less than 2.5 mm and not more than 10 mm.

11. The vehicle (100) according to claim 4 or any claim dependent thereon, wherein a recess (33a) extending in the front-and-rear direction is formed in an inner surface of the harness holder (33) and a part of the harness (60) is introduced into the recess (33a) of the harness holder (33).

12. The vehicle (100) according to claim 8 or any claim dependent thereon, wherein the unit mount portion (31) is provided at a position further upward than a central portion of the engine unit (70) in the up-and-down direction (H) of the vehicle.

## Patentansprüche

1. Fahrzeug vom Sattel- oder Grätschsitz-Typ (100), umfassend:
einen Karosserierahmen (10), der ein Kopfrohr (3) und einen rechten und linken Hauptrahmen (1) einschließt, welche sich vom Kopfrohr (3) aus in einer rückwärtigen Fahrzeugrichtung erstrecken;
ein Paar von Aufhängungsabschnitten des Motors (1b), wobei sich jeder Aufhängungsabschnitt des Motors (1b) von einem jeweiligen Hauptrahmen (1) in einer Richtung nach unten erstreckt;
eine Motoreinheit (70); und
eine elektronische Steuereinheit (40), die mit der Motoreinheit (70) über einen Kabelbaum (60) verbunden ist, wobei
die Motoreinheit (70) Folgendes beinhaltet:
eine Zylindereinheit (71), die durch das Paar von Aufhängungsabschnitten des Motors (1b) gehalten wird, und
eine Kurbeleinheit (72), die unterhalb der Zylindereinheit (71) angeordnet und breiter als die Zylindereinheit (71) in einer Fahrzeugbreitenrichtung ist; **dadurch gekennzeichnet,**
**dass** die elektronische Steuereinheit (40) in einer Weise vorgesehen ist, dass zumindest ein Teil eines Aufhängungsabschnitts des Motors (1b) zwischen der elektronischen Steuereinheit (40) und der Zylindereinheit (71) der Motoreinheit (70) in Fahrzeugbreitenrichtung angeordnet ist.

2. Fahrzeug (100) nach Anspruch 1, zusätzlich umfassend:
einen Kühler (50), der an einer Position, die weiter hinten als das Kopfrohr (3) und weiter vorne als die elektronische Steuereinheit (40) liegt, angeordnet ist; und
ein Einheiten-Halteelement (30), welches einen Abschirmungsteil (32) besitzt, welcher die elektronische Steuereinheit (40) vom Kühler (50) abschirmt und die elektronische Steuereinheit (40) an, neben oder relativ zu dem einen Aufhängungsabschnitt des Motors (1b) hält.

3. Fahrzeug (100) nach Anspruch 2, wobei
der Abschirmungsteil (32) eine Außenfläche (32S) aufweist, die konfiguriert ist, einen in einer rückwärtigen Richtung erzeugten Luftstrom in Fahrzeugbreitenrichtung vom Kühler (50) zu einer Außenseite der elektronischen Steuereinheit (40) zu leiten.

4. Fahrzeug (100) nach Anspruch 2 oder 3, wobei
das Einheiten-Halteelement (30) einen Kabelbaumhalter (33) aufweist, der einen Teil des Kabelbaums (60), welcher mit der elektronischen Steuereinheit (40) verbunden ist, an dem einen Aufhängungsabschnitt des Motors (1b) hält.

5. Fahrzeug (100) nach einem der Ansprüche 1 bis 4, wobei
ein hinterer Abschnitt der elektronischen Steuereinheit (40) einen Steckverbinderteil (41) aufweist, an dem der Kabelbaum (60) angeschlossen ist.

6. Fahrzeug (100) nach Anspruch 5, welches zusätzlich einen Deckel für den Steckverbinder (34) umfasst, der dafür vorgesehen ist, den Steckverbinderteil (41) der elektronischen Steuereinheit (40) abzudecken.

7. Fahrzeug (100) nach einem der Ansprüche 2 bis 6, das ferner eine Einheitenabdeckung (35) aufweist, die am Einheiten-Halteelement (30) befestigt ist, um eine Außenfläche der elektronischen Steuereinheit (40) abzudecken.

8. Fahrzeug (100) nach einem der Ansprüche 2 bis 7, wobei das Einheiten-Halteelement (30) ferner einen Montageabschnitt für die Einheit (31) besitzt, der zwischen dem einen Aufhängungsabschnitt des Motors (1b) und der elektronischen Steuereinheit (40) positioniert ist, und
wobei der Abschirmungsteil (32) und der Montageabschnitt für die Einheit (31) aus einem Stück ausgebildet sind.

9. Fahrzeug (100) nach Anspruch 8, falls abhängig von Anspruch 4, wobei der Abschirmungsteil (32), der Kabelbaumhalter (33) und der Montageabschnitt für die Einheit (31) aus einem Stück ausgebildet sind.

10. Fahrzeug (100) nach einem der vorhergehenden Ansprüche, wobei die Dicke von jedem der Aufhängungsabschnitte des Motors (1b) nicht weniger als 2,5 mm und nicht mehr als 10 mm beträgt.

11. Fahrzeug (100) nach Anspruch 4 oder jedwedem davon abhängigen Anspruch, wobei eine Ausnehmung (33a), die sich in der Vorwärts-und-Rückwärtsrichtung erstreckt, in einer Innenfläche des Kabelbaumhalters (33) ausgebildet ist und ein Teil des Kabelbaums (60) in die Ausnehmung (33a) des Kabelbaumhalters (33) eingeführt wird.

12. Fahrzeug (100) nach Anspruch 8 oder jedwedem davon abhängigen Anspruch, wobei der Montageabschnitt für die Einheit (31) an einer Position vorgesehen ist, die sich weiter nach oben als eine zentrale Position der Motoreinheit (70) in der Aufwärts- und Abwärtsrichtung (H) des Fahrzeugs befindet.

## Revendications

1. Véhicule du type à selle ou du type à enfourcher (100), comprenant :
un cadre de châssis (10) englobant un tube de tête (3) et des cadres principaux de droite et de gauche (1) s'étendant dans une direction allant vers l'arrière du véhicule à partir du tube de tête (3) ;
une paire de parties de suspension du moteur (1b), chaque partie de suspension du moteur (1b) s'étendant dans une direction allant vers le bas à partir d'un cadre principal respectif (1) ;
une unité de moteur (70) ; et
une unité de commande électronique (40) connectée à l'unité de moteur (70) par un harnais (60), dans lequel
l'unité de moteur (70) englobe :
une unité de cylindre (71), supportée par la paire de parties de suspension du moteur (1b), et
une unité de manivelle (72) positionnée au-dessous de l'unité de cylindre (71) et plus large que l'unité de cylindre (71) dans une direction de la largeur du véhicule ; **caractérisé en ce que** :
l'unité de commande électronique (40) est agencée de sorte qu'au moins une partie de la partie de suspension du moteur (1b) est positionnée entre l'unité de commande électronique (40) et l'unité de cylindre (71) de l'unité de moteur (70), dans la direction de la largeur du véhicule.

2. Véhicule (100) selon la revendication 1, comprenant en outre :
un radiateur (50) agencé au niveau d'une position située plus vers l'arrière que le tube de tête (3) et plus vers l'avant que l'unité de commande électronique (40) ; et
un élément de retenue de l'unité (30), comportant une partie de protection (32) protégeant l'unité de commande électronique (40) du radiateur (50), et retenant l'unité de commande électronique (40) au niveau de ladite une partie de suspension du moteur (1b), en un point adjacent à celle-ci ou par rapport à celle-ci.

3. Véhicule (100) selon la revendication 2, dans lequel :
la partie de protection (32) comporte une surface externe (32S), configurée de sorte à guider un écoulement d'air, formé dans une direction allant vers l'arrière du radiateur (50), vers un extérieur de l'unité de commande électronique (40), dans la direction de la largeur du véhicule.

4. Véhicule (100) selon les revendications 2 ou 3, dans lequel :
l'élément de retenue de l'unité (30) comporte un élément de retenue du harnais (33) retenant une partie du harnais (60) dans un état connecté à l'unité de commande électronique (40) au niveau de ladite une partie de suspension du moteur (1b).

5. Véhicule (100) selon l'une quelconque des revendications 1 à 4, dans lequel :
une partie arrière de l'unité de commande électronique (40) comporte une partie de connexion (41) à laquelle est connecté le harnais (60).

6. Véhicule (100) selon la revendication 5, comprenant en outre un couvercle de connexion (34) destiné à recouvrir la partie de connexion (41) de l'unité de commande électronique (40).

7. Véhicule (100) selon l'une quelconque des revendications 2 à 6, comprenant en outre un couvercle de l'unité (35) monté sur l'élément de retenue de l'unité (30) en vue de recouvrir une surface externe de l'unité de commande électronique (40).

8. Véhicule (100) selon l'une quelconque des revendications 2 à 7, dans lequel :
l'élément de retenue de l'unité (30) comporte en outre une partie de montage de l'unité (31) positionnée entre ladite une partie de suspension du moteur (1b) et l'unité de commande électronique (40), et
la partie de protection (32) et la partie de montage de l'unité (31) sont formées d'une seule pièce.

9. Véhicule (100) selon la revendication 8, dépendant de la revendication 4, dans lequel la partie de protection (32), l'élément de retenue du harnais (33) et la partie de montage de l'unité (31) sont formés d'une seule pièce.

10. Véhicule (100) selon l'une quelconque des revendications précédentes, dans lequel l'épaisseur de chacune des parties de suspension du moteur (1b) n'est pas inférieure à 2,5 mm et pas supérieure à 10 mm.

11. Véhicule (100) selon la revendication 4 ou l'une quelconque des revendications qui en dépend, dans lequel un évidement (33a), s'étendant dans la direction allant vers l'avant et vers l'arrière, est formé dans une surface interne de l'élément de retenue du harnais (33), une partie du harnais (60) étant introduite dans l'évidement (33a) de l'élément de retenue du harnais (33).

12. Véhicule (100) selon la revendication 8 ou selon l'une quelconque des revendications qui en dépend, dans lequel la partie de montage de l'unité (31) est agencée au niveau d'une position située plus vers le haut qu'une partie centrale de l'unité de moteur (70), dans la direction allant vers le haut et vers le bas (H) du véhicule.
